# EUROPÄISCHE PATENTSCHRIFT

(11) **EP 1 040 690 B1**
(45) Veröffentlichungstag und Bekanntmachung des Hinweises auf die Patenterteilung: **21.12.2005**
(21) Anmeldenummer: 99950679.3
(22) Anmeldetag: 07.10.1999
(51) Int. Cl.: H04Q 7/26, H04Q 3/00

(54) **VERFAHREN ZUR BEHANDLUNG VON CALLS IN PCS KOMMUNIKATIONSNETZEN**
METHOD FOR HANDLING CALLS IN PCS COMMUNICATION NETWORKS
PROCEDE DE TRAITEMENT D'APPELS DANS DES RESEAUX DE SERVICES DE COMMUNICATION PERSONNELLE

(30) Priorität: 22.10.1998 EP 98119790
(43) Veröffentlichungstag der Anmeldung: 04.10.2000
(73) Patentinhaber: SIEMENS AKTIENGESELLSCHAFT, 80333 München (DE)
(72) Erfinder: KRETEN, Axel, D-82178 Puchheim (DE); RAU, Helmut, D-82118 Germering (DE)
(86) Internationale Anmeldenummer: PCT/EP1999/007560
(87) Internationale Veröffentlichungsnummer: WO 2000/025537

(56) Entgegenhaltungen:
- EP-A- 0 738 093
- DE-A- 4 343 335

## Beschreibung

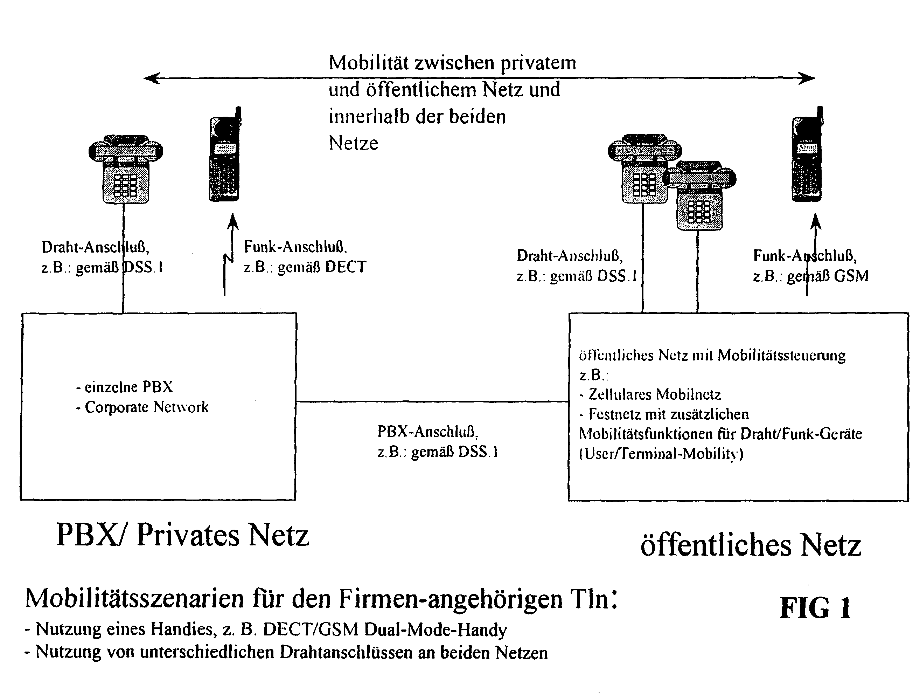

Der Personal Comunication Service PCS ermöglicht es einem Tln, sich mit seinem eigenem Handy sowohl
- an seiner eigenen Home Base Station HBS,
- an einer fremden HBS als auch
- im Mobil-Netz
einloggen (einbuchen) zu können. Der Tln ist immer unter ein und derselben RNr. zu erreichen. Dabei kann sich die Mobilität des Tlns auf ein Handy stützen, welches zwischen öffentlicher Funkversorgung und 'privater' Funkversorgung (Home Base Station) umschalten kann (Bsp.: GSM/DECT-Dual.Mode Handy). Die Mobilität des Tlns kann sogar endgeräteunabhängig, d.h. über fremde Endgeräte, z.B. Drahtanschlüsse (siehe FIG 1) unterstützt werden.

Als RNr. kommen drei Typen in Frage:
- Festnetz-RNr (Geographische RNr.);dies ist eine RNr. aus dem RNr.-Bereich der Vermittlungsstelle VSt, an der die HBS des Tln's angeschlossen ist.
- Mobile-RNr.; dies ist eine RNr. aus dem Mobilnetz, in dem der Tln roamen kann,
- Service-RNr.; dies ist eine RNr. aus einem speziellen Nummern-Volumen. Die Service-RNr.ist (Fest-) Netzspezifisch aber nicht VSt-spezifisch.

Calls zu mobilen Tln werden zu bestimmten 'Gateway-Vst'n geroutet, von denen durch Abfrage einer zentralen Datenbasis (z.B. Home Location Register HLR im Falle des Mobile Netzes) festgestellt wird, wo sich der Tln zur Zeit befindet. Der Call wird dann mittels einer nur zum Routen benötigten Nr. (Mobile Station Roaming Number MSRN) zur Aufenthalts-VSt des gewünschten Tln's geroutet und dort über eine HBS (Tln im Festnetz eingeloggt) oder eine Mobile Base Station (Tln im Mobile Netz eingeloggt) zugestellt.

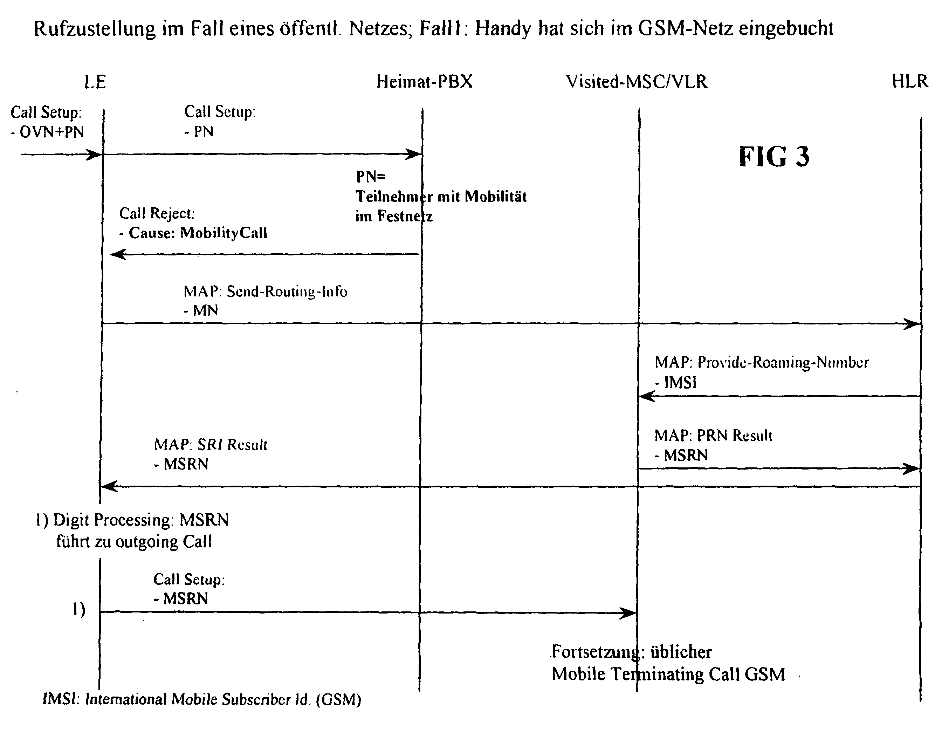

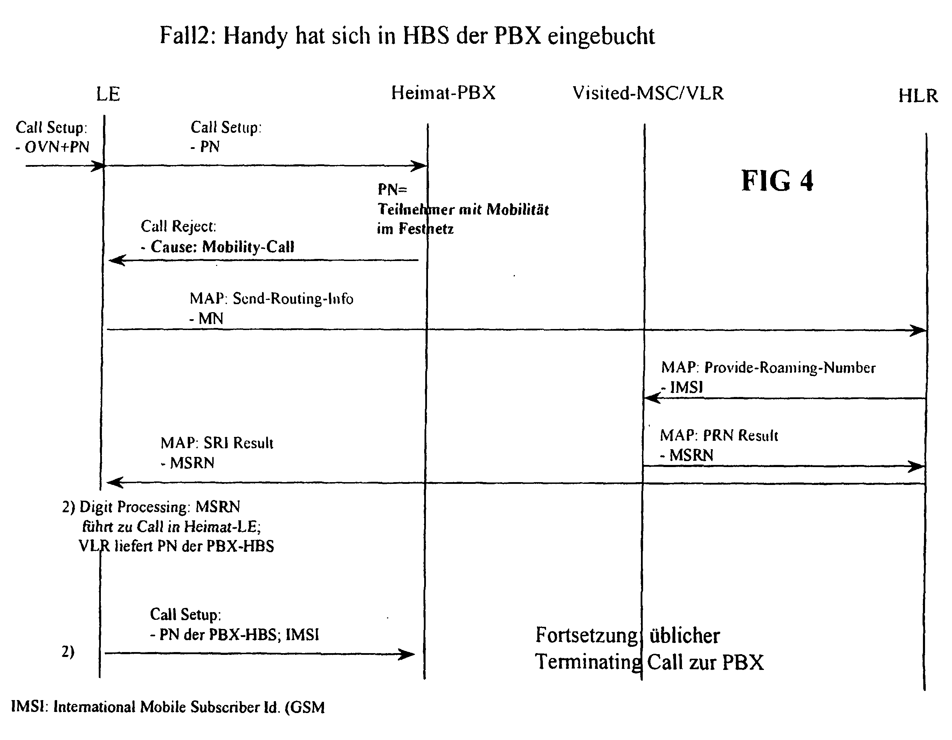

Hat der PCS-Tln eine Festnetz-RNr. (Service-RNr oder Geographische RNr.), so wird prinzipiell zur Heimat-VSt (local exchange LE) des Tln's geroutet (bei der Service-RNr indirekt über eine SCP-Abfrage). Erst dort kann auf Grund eines administrierten TIn-Kennzeichens (PCS-Flag) festgestellt werden, daß es sich um einen Tln mit Mobilität (PCS-Tln) handelt. Diese VSt (und damit jede Festnetz-Tln-VSt) muß die oben beschriebene Gateway-Funktion bzgl. Tln-Mobilität durchführen, weshalb sie zumindestens eine MSC-Teilfunktionalität oder eine SSP-Funktionalität aufweisen muß (in FIG 3 und 4 ist angenommen, daß die LE eine MSC-Teilfunktionalität besitzt).

Hat der PCS-Tln eine Service.RNr. ist es ebenso möglich, daß sich aus der genannten Abfrage einer zentralen Datenbasis (z.B. SCP) eine Geographische RNr. ergibt, die dann zunächst zum Heimat-Netzknoten des PCS-Tln geroutet wird.

Ein wichtiger Anwendungsfall für die o.g. Mobilität betrifft Tln einer PBX mit DDI (Nebenstelle mit Durchwahl).
Dabei kann sich die Mobilität z.B. auf ein Handy stützen, welches zwischen öffentlicher Funkversorgung und PBX-Funkversorgung umschalten kann. Bsp.: GSM/DECT-Dual.Mode Handy. Die PBX kann an eine LE eines Festnetzes oder eine MSC eines Mobilnetzes angeschlossen sein. Der Tln hat eine Intercom-RNr. ('Extension'), mit der er PBX-intern erreicht werden kann. Aus dem öffentlichen Netz ist der Tln mit Pilot-Nr. (=PBX-RNr.) + Extension zu erreichen. Diese RNr. ist eine Geographische RNr., die einem Tln innerhalb der PBX zugeordnet ist; die 'Mobilität' (Kenntnis über den Aufenthaltsort des Tln's) wird aber notwendigerweise im Öffentlichen Netz (Zentrale Datenbasis) abgewickelt, da sich der Teilnehmer zumindest zeitweilig in dessen Verwaltungsbereich aufhält! Bei Intercom-Verbindungen ist die Mobilität des angewählten Tln's (Abfrage der zentralen Datenbasis des öffentlichen Netzes) ebenso zu berücksichtigen, wie bei Verkehr aus dem Öffentlichen Netz in die PBX hinein (Terminierender Verkehr).

Eine Lösungsmöglichkeit besteht darin, daß für Intercom-Calls die 'Mobilitäts-Kennung' (PCS-Flag) in der PBX und für Terminierenden Verkehr aus dem öffentlichen Netz in der öffentlichen Local Exchange LE, an der die PBX angeschlossen ist, geführt werden: bei dieser Lösung müssten in der LE alle Extensions (vollständig bis zur letzten Ziffer) administriert und bei allen Terminierenden Verbindungen zu dieser PBX vermittlungstechnisch bewertet werden, um die 'Mobilitäts-Kennung' zu finden! Dies würde bedeuten, daß der Teilnehmer an insgesamt drei Stellen einzurichten wäre:
- in der PBX, in der auch alle anderen Merkmale des PBX-Tln's verwaltet sind,
- in der Mobilitätsdatenbasis des öffentlichen Netzes
- und (was gerade zu vermeiden ist) in der öffentlichen LE, an die die PBX angeschlossen ist!

Das Document DE 43 43 335 A1 offenbart ein Verfahren, bei dem eine an eine PBX angeschlossene DECT-Basisstation kontinuierlich überprüft, ob sich eine Mobilstation im Versorgungsbereich des DECT-Netzer befindet. Ist dies nicht der Fall, so aktiviert die PBX eine Rufumleitung auf das öffentliche Netz.

Der Erfindung liegt die Aufgabe zugrunde, ein Verfahren zur Behandlung von Calls in Kommunikationsnetzen anzugeben, das die genannten Nachteile vermeidet.

Im folgenden wird ein Ausführungsbeispiel der Erfindung anhand der Zeichnung näher erläutert, wobei die Zeichnung 4 Figuren umfaßt.

Die erfindungsgemäße Lösung sieht vor, die 'Mobilitäts-Kennung' der einzelnen Extensions nur in der PBX zu administrieren und zu führen (In der LE ist nur die gesamte PBX gekennzeichnet als PBX mit PCS-Extensions). Die (Parallel-) Administration in der LE des öffentlichen Netzes wird dadurch vermieden, daß in allen relevanten Verbindungsfällen die LE von der PBX aus aufgerufen wird, die Mobilitäts-relevanten Funktionen durchzuführen.

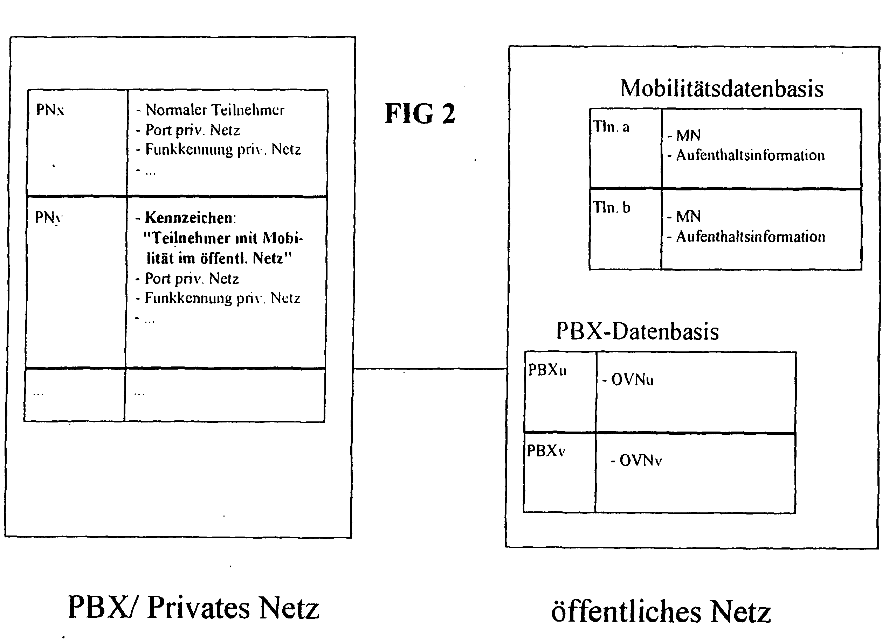

FIG 2 zeigt verschiedene Teilnehmerdatenbasen, die im folgenden kurz erläutert werden.
- PN: Tln-Nummer innerhalb des privaten Netzes aus der Sicht des öffentlichen Netzes(= Extension)
- OVN: öffentliche Vorwahl-Nummer des Privaten Netzes (= Pilot-RNr)
- MN: Mobilitätsrufnummer des öffentl. Netzes, z.B. OVN+PN oder Service-Rufnummer, u.U. mit PN als letzte Ziffern
- PBX-Datenbasis im öffentlichen Netz: sie enthält Information für das PBX/ Private Netz als Ganzes. Die Datenbasis zu einer PBX liegt üblicherweise lokal in der VSt des öffentlichen Netzes, an dem die PBX angeschlossen ist.
- Mobilitätsdatenbasis des öffentlichen Netzes: sie enthält Aufenthaltsinformation für Teilnehmer. Die Mobilitätsdatenbasis ist üblicherweise zentral im Netz (ggfs. auf einige Standorte aufgeteilt) und außerhalb der Vermittlungsknoten (SCP einer öffentlichen IN-basierten Lösung / HLR einer GSM-basierten Lösung). Darüberhinaus können im Rahmen der Mobilitätsdatenbasis auch weitere zeitweilig existierende Datenbasis-Einträge in den Vermittlungsknoten angelegt werden, z.B. GSM-VLR in besuchter Vermittlungsstelle (gleich momentaner Aufenthaltsort des betreffenden Tln).
- Aufenthaltsinformation kann sowohl auf Anschluß/Aufenthalt (Draht / Funk-Bereich) des öffentlichen Netzes als auch auf Anschluß/Aufenthalt (Draht/ Funk-Bereich) des privaten Netzes verweisen

Im folgenden werden Beispiele für prinzipielle Verbindungsabläufe erläutert:

### Terminierender Call zu PCS-Teilnehmer (siehe Fig. 3 und 4):

Ein Terminierender Call (Call aus dem Öffentlichen Netz in die PBX hinein) wird von der LE der PBX normal zugestellt. Wenn die PBX bei der Bewertung der Extension auf 'Mobilität' erkennt, weist sie den Call an die LE zurück ('Call Reject' : Cause 'Mobility Call'+'Mobility Call-Type'). Die LE löst die Belegung zur PBX aus und startet die 'Mobility-Abläufe' mit der Abfrabe (MAP, INAP, ....) der zentralen Mobility-DB (z.B. Home-Location-Register HLR, Service Control Point SCP, .....). Entsprechend dem 'Mobility-Call-Type' können unterschiedliche Mobility-DB's abgefragt werden.
Entsprechend dem Ergebnis (z.B. Mobile Station Roaming Number MSRN) aus der Mobility-DB (ggf. unter Berücksichtigung des Mobility Call-Type) vervollständigt die LE den Call.

### Entweder

a) Belegen der PBX (siehe FIG. 4) mit der Extension der PBX-Basisstation (oder der Rufnummer einer PBX-Applikation, die mehrere PBX-Basistationen verwaltet) + Kennung des gewünschten Tln's (Funkidentität z.B.: GSM IMSI oder Rufnummer PBX-Drahtanschluß) oder
b) Weiter Routen des Calls mittels MSRN zu einer anderen LE im Festnetz oder
c) Weiter Routen des Calls mittels MSRN im Mobile Netz (LE ist Gateway zum Mobile Netz).

Anmerkung: Für den Fall a.) wird angenommen, daß im öffentlichen Netz die Rufnummer (PBX-Pilotnummer + Extension) der aktuellen PBX-Basisstation in den ensprechenden Mobilitätsregistern (GSM: VLR/HLR, IN-Netz: SCP) registriert wurde. Im Falle einer GSM-basierten Lösung sind das typischerweise automatische Registrierungs-Prozeduren, die durch das Einbuchen des Handies an der PBX in Richtung öffentliches Netz erfolgen. Im Falle einer IN- basierten Lösung sind dies üblicherwiese manuell - durch einen Service-Call - ausgelöste Registrierprozeduren (Follow-me-Call).

### Intercom-Call zu PCS-Teilnehmer:

Ein Intercom-Call der PBX zu einem (PBX internen) PCS-Tln wird von der PBX auf Grund des PCS-Flag beim PBX-B-Tln zunächst der LE angeboten mit der Zusatzkennung 'Mobility Call' (+'Mobility Call-Type'). Die LE startet die 'Mobility-Abläufe' mit der Abfrabe (MAP, INAP, ....) der zentralen Mobility-DB (z.B. Home-Location-Register HLR, Service Control Point SCP, .....).
Entsprechend dem Ergebnis (z.B. Mobile Station Roaming Number MSRN) aus der Mobility-DB (ggf. unter Berücksichtigung des Mobility Call-Type) vervollständigt die LE den Call.

### Entweder

- Call Reject (zur PBX) mit der Kennung 'Tln in PBX' . (ggf. mit der Extension der PBX-Basistation + Kennung des gewünschten Tln's (Funkidentität z.B.: GSM IMSI oder Rufnummer PBX-Drahtanschluß) oder
- Weiter Routen des Calls mittels MSRN im Festnetz oder
- Weiter Routen des Calls mittels MSRN im Mobile Netz (LE ist Gateway zum Mobile Netz).

Das skizzierte Verfahren ist auch auf die Mobilität anwendbar, die durch 'Home Working' von PBX-Tln gegeben ist. Der Home Worker ist immer unter seiner PBX-RNr. erreichbar (Terminierender Verkehr oder Intercom Verkehr). Der aktuelle Aufenthalts-Ort ist wie oben beschrieben in einer zentralen DB (z.B. SCP) enthalten. Die Abläufe entsprechen prinzipiell den oben für PCS beschriebenen Abläufen.

### Originating Call von PCS-Teilnehmer:

Solche Rufe eines PCS-Tln sind abhängig von dem in der PBX teilnehmer-individuell gespeicherten "Mobility Call-Type" generell über dem öffentliche Mobilitäts-Netz anzubieten bzw über das öffentliche Mobilitäts-Netz zu routen. Dies ist dann notwendig, wenn das öffentlichen Netz Funktionen für Originating Calls übernimmt: Bsp. Authentifizierung der Mobilitätsidentität, Prüfung der gewählten Ziffern auf Zulässigkeit der Verkehrsbeziehung. Die Kennung für das "Zwangs"-Routing von der PBX zum öffentlichen Netz könnte in der PBX zentral vorliegen (z.B: Pilot-RNr. der PBX) oder der "Mobility Call-Type" in der PBX könnte eine teilnehmerindividuelle Kennung enthalten (z.B. Vorwahl des Mobilnetzes 0171/0172, Service-Rufnummer des IN-Dienstes)

### Vorteile der erfindungsgemäßen Lösung:

Der Vorteil der Lösung liegt darin, daß:
1. Die Parallel-Administrierung in der (öffentlichen) LE und der (privaten) PBX vermieden wird. Damit entfallen hier alle verwaltungstechnischen Probleme (Synchrone, fehlerfreie, identische Eingaben) und die Probleme, die sich bei Diskrepanzen ergeben.
2. Die Auswertung der Extension der PBX bis zur letzten Ziffer und die Bewertung der Extension-Daten in der LE vermieden wird.
3. Das Verfahren (wie oben angedeutet, auch auf andere Features anwendbar ist, bei denen für einzelne Extensions der PBX besondere Abläufe im öffentlichen Netz notwendig sind (z.B. Home Working).

### Verwendete Abkürzungen:

- DB:: Datenbasis
- DECT:: Digital European Cordless Telecommunication
- DDI:: Direct Dialing In..............
- GSM:: Global System for Mobile Communication
- HLR:: Home Location Register
- IN:: Intelligent Network
- INAP:: IN Application Part Protokoll
- LE:: Local Exchange (Orts-VSt)
- MAP:: Mobile Application Part Protokoll
- MN:: Mobilitätsrufnummer des öffentl. Netzes
- MSC:: Mobile Switching Center
- MSRN:: Mobile Station Roaming Number
- OVN:: öffentliche Vorwahl-Nummer des Privaten Netzes
- PBX:: Private Branch Exchange (Nebenstelle)
- PN:: Tln-Nummer innerhalb des privaten Netzes aus der Sicht des öffentlichen Netzes
- PCS:: Personal Comunication Service
- RNr:: Rufnummer
- SCP:: Service Control Point
- SSP:: Service Switching Point
- Tln:: Teilnehmer
- VLR:: Visitor Location Register
- VSt:: Vermittlungsstelle

## Patentansprüche

1. Verfahren zur Behandlung von Calls in Kommunikationsnetzen, demgemäß
a) bei einem Call zu einem in einem ersten Netzknoten (PBX) eines privaten Netzes beheimateten Teilnehmer, der diesem ersten Netzknoten (PBX) zugestellt wird, anhand einer in diesen ersten Netzknoten (PBX) gespeicherten Kennung des Teilnehmers geprüft wird, ob es sich um einen mobilen Teilnehmer handelt,
b) der genannte Call von dem genannten ersten Netzknoten (PBX) an einen zweiten Netzknoten (LE) des öffentlichen Netzes übergeben wird, wenn die genannte Prüfung ergibt, dass es sich um einen mobilen Teilnehmer handelt,
c) dem genannten zweiten Netzknoten (LE) bei der Übergabe des Calls gleichzeitig mitgeteilt wird, dass es sich um einen Call zu einem mobilen Teilnehmer handelt,
d) von dem zweiten Netzknoten (LE) unter Zuhilfenahme einer Abfrage bei einer Mobilitäts-Datenbasis (SCP, HLR) eine weitere Mobilitäts-relevante Behandlung des Calls durchgeführt wird.

2. Verfahren nach Anspruch 1,
**dadurch gekennzeichnet, dass**
dem genannten zweiten Netzknoten (LE) bei der genannten Übergabe des Calls anhand einer weiteren Kennung mitgeteilt wird welche Mobilitäts-Datenbasis (SCP, HLR) zu der genannten Abfrage benutzt werden soll.

3. Netzknoten (PBX) eines privaten Netzes, der
a) bei einem Call zu einem in diesem Netzknoten (PBX) beheimateten Teilnehmer, der diesem Netzknoten (PBX) zugestellt wird, anhand einer in dem Netzknoten (PBX) gespeicherten Kennung des Teilnehmers prüft, ob es sich um einen mobilen Teilnehmer handelt,
b) den genannten Call an einen Netzknoten (LE) des öffentlichen Netzes mit einer Schnittstelle zu einer Mobilitäts-Datenbasis (SCP, HLR) zur weiteren Mobilitäts-Relevanten Behandlung übergibt, wenn die genannte Prüfung ergibt, dass es sich um einen mobilen Teilnehmer handelt,
c) dem genannten Netzknoten (LE) des öffentlichen Netzes bei der Übergabe des Calls gleichzeitig mitteilt, dass es sich um einen Call zu einem mobilen Teilnehmer handelt.

4. Netzknoten (PBX) eines privaten Netzes nach Anspruch 3,
**dadurch gekennzeichnet, dass**
der Netzknoten (PBX) des privaten Netzes dem genannten Netzknoten (LE) des öffentlichen Netzes bei der genannten Übergabe des Calls anhand einer weiteren Kennung mitteilt, welche Mobilitäts-Datenbasis (SCP, HLR) er zu der genannten Abfrage benutzen soll.

5. Netzknoten (LE) eines öffentlichen Netzes, der
a) einen Call zu einem Teilnehmer, der in einem Netzknoten (PBX) eines privaten Netzes beheimatet ist, diesem Netzknoten (PBX) des privaten Netzes zustellt,
b) den genannten Call unter gleichzeitiger Mitteilung, dass es sich um einen Call zu einen mobilen Teilnehmer handelt, zurückerhält, wenn der Netzknoten (PBX) des privaten Netzes anhand einer in diesem Netzknoten (PBX) gespeicherten kennung feststellt, dass es sich um einen mobilen Teilnehmer handelt,
c) für einen von dem Netzknoten (PBX) des privaten Netzes solchermaßen zurückerhaltenen Call eine Mobilitäts-relevante weitere Behandlung durchführt, wobei er hierzu eine Abfrage bei einer Mobilitäts-Datenbasis (SCP, HLR) durchführt.

## Claims

1. Method for handling calls in communication networks, in accordance with which
a) for a call to a subscriber located in a first network node (PBX) of a private network which is submitted to this first network node (PBX), a check is made on the basis of an identifier of the subscriber stored in this first network node (PBX) as to whether the subscriber is a mobile subscriber,
b) said call is transferred by said first network node (PBX) to a second network node (LE) of the public network if said check reveals that a mobile subscriber is involved,
c) said second network node (LE) is simultaneously notified on transfer of the call, that this is a call to a mobile subscriber,
d) further mobility-relevant handling of the call is performed by the second network node (LE) with the assistance of a query to a mobility database (SCP, HLR).

2. Method in accordance with claim 1
**characterized in that**
said second network node (LE), on said transfer of the call, is notified on the basis of a further identifier of which mobility database (SCP, HLR) is to be used for said query.

3. Network node (PBX) of a private network, which
a) for a call to a subscriber located in a first network node (PBX) of a private network which is submitted to this network node (PBX), checks on the basis of an identifier of the subscriber stored in this network node (PBX) whether the subscriber involved is a mobile subscriber,
b) transfers said call to a network node (LE) of the public network with an interface to a mobility database (SCP, HLR) for further mobility-relevant handling if said check reveals that the subscriber involved is a mobile subscriber,
c) simultaneously notifies said network node (LE) of the public network on transfer of the call that this involves a call to a mobile subscriber.

4. Network node (PBX) of a private network in accordance with claim 3,
**characterized in that**
the network node (PBX) of the private network{002} notifies said network node (LE) of the public network for said transfer of the call, based on a further identifier, as to which mobility database (SCP, HLR) it should use for said query.

5. Network node (LE) of a public network, which
a) submits a call to a subscriber who is located in a network node (PBX) of a private network to this network node (PBX) of the private network,
b) is returned said call with simultaneous notification that it involves a call to a mobile subscriber, if the network node (PBX) of the private network establishes, on the basis of an identifier stored in this network node (PBX), that a mobile subscriber is involved,
c) for a call returned by the network node (PBX) of the private network in such a way, performs mobility-relevant further handling, in which case it undertakes a query to a mobility database (SCP, HLR) in this case.

## Revendications

1. Procédé de traitement d'appels dans des réseaux de communication, selon lequel
a) lors d'un appel à destination d'un abonné domicilié dans un premier noeud de réseau (PBX) d'un réseau privé, qui est distribué à ce premier noeud de réseau (PBX), il est vérifié à l'aide d'une identification de l'abonné, mémorisée dans ce premier noeud de réseau (PBX), s'il s'agit d'un abonné mobile,
b) ledit appel est transmis par ledit premier noeud de réseau (PBX) à un deuxième noeud de réseau (LE) du réseau public lorsqu'il résulte de ladite vérification qu'il s'agit d'un abonné mobile,
c) il est simultanément communiqué audit deuxième noeud de réseau (LE) lors du transfert de l'appel qu'il s'agit d'un appel à destination d'un abonné mobile,
d) un autre traitement de l'appel, important pour la mobilité, est exécuté par le deuxième noeud de réseau (LE), à l'aide d'une interrogation auprès d'une base de données de mobilité (SCP, HLR).

2. Procédé selon la revendication 1,
**caractérisé**
**en ce qu'**il est communiqué, à l'aide d'une autre identification, audit deuxième noeud de réseau (LE) lors dudit transfert de l'appel, quelle base de données de mobilité (SCP, HLR) doit être utilisée pour ladite interrogation.

3. Noeud de réseau (PBX) d'un réseau privé, qui
a) lors d'un appel à destination d'un abonné domicilié dans ce noeud de réseau (PBX), qui est distribué à ce noeud de réseau (PBX), vérifie à l'aide d'une identification mémorisée dans le noeud de réseau (PBX) s'il s'agit d'un abonné mobile,
b) transmet ledit appel à un noeud de réseau (LE) du réseau public ayant une interface vers une base de données de mobilité (SCP, HLR) pour continuer le traitement important quant à la mobilité, lorsqu'il résulte de ladite vérification qu'il s'agit d'un abonné mobile,
c) communique simultanément audit noeud de réseau (LE) du réseau public, lors du transfert de l'appel, qu'il s'agit d'un appel à destination d'un abonné mobile.

4. Noeud de réseau (PBX) d'un réseau privé selon la revendication 3,
**caractérisé en ce que**,
lors dudit transfert, le noeud de réseau (PBX) du réseau privé communique audit noeud de réseau (LE) du réseau public, à l'aide d'une autre identification, quelle base de données de mobilité (SCP, HLR) il doit utiliser pour ladite interrogation.

5. Noeud de réseau (LE) d'un réseau public qui
a) distribue un appel à destination d'un abonné, qui est domicilié dans un noeud de réseau (PBX) d'un réseau privé, à ce noeud de réseau (PBX) du réseau privé,
b) retient ledit appel, en communiquant simultanément qu'il s'agit d'un appel à destination d'un abonné mobile, lorsque le noeud de réseau (PBX) du réseau privé constate à l'aide d'une identification mémorisée dans ce noeud de réseau (PBX) qu'il s'agit d'un abonné mobile,
c) exécute un autre traitement important quant à la mobilité pour un appel retenu de cette manière par le noeud de réseau (PBX) du réseau privé, réalisant à cet effet une demande auprès d'une base de données de mobilité (SCP, HLR).
